# EUROPÄISCHE PATENTSCHRIFT

(11) **EP 4 342 685 B1**
(45) Veröffentlichungstag und Bekanntmachung des Hinweises auf die Patenterteilung: **27.08.2025**
(21) Anmeldenummer: 23195313.4
(22) Anmeldetag: 05.09.2023
(51) Int. Cl.: B60C 11/03, B60C 11/12

(54) **FAHRZEUGLUFTREIFEN**
PNEUMATIC TYRE FOR VEHICLES
BANDAGE PNEUMATIQUE POUR VÉHICULE

(30) Priorität: 22.09.2022 DE 102022210004
(43) Veröffentlichungstag der Anmeldung: 27.03.2024
(73) Patentinhaber: Continental Reifen Deutschland GmbH, 30175 Hannover (DE)
(72) Erfinder: Özüduru, Ahmet, 30165 Hannover (DE); Soyyuece, Atakan, 30165 Hannover (DE); Ecke, Stefan, 30165 Hannover (DE)
(74) Vertreter: Continental Corporation

(56) Entgegenhaltungen:
- DE-A1- 102017 212 710
- DE-A1- 102017 215 742
- DE-A1- 102019 131 570
- DE-A1- 102019 220 135
- JP-A- 2010 064 699
- US-A1- 2012 180 920
- US-A1- 2013 133 799
- US-A1- 2017 129 287

## Beschreibung

Die Erfindung betrifft einen Fahrzeugluftreifen mit einem laufrichtungsgebunden ausgeführten Laufstreifen mit durch Rillen begrenzten Profilpositiven mit in Draufsicht zur axialen Richtung unter einem Winkel von 0° bis zu 50° verlaufenden, die Profilpositive insbesondere durchquerenden Einschnitten, welche jeweils eine maximale Tiefe von 70 % bis 100 % der Profiltiefe, zwei Einschnittwände, eine beim Abrollen des Reifens bei Vorwärtsfahrt zuerst in den Untergrund eintretende, einlaufende Einschnittkante, eine auslaufende Einschnittkante und jeweils zumindest einen über seine gesamte Tiefenerstreckung in Draufsicht in Form einer harmonischen Welle gewellt verlaufenden Einschnittabschnitt mit einer der Ausbreitungsrichtung der Welle entsprechenden Wellenmittellinie aufweisen, wobei der gewellt verlaufende Einschnittabschnitt über zumindest 2,0 Wellenlängen reicht und, im Querschnitt betrachtet, eine gerade verlaufende, radial äußere Einschnittzone, eine gerade verlaufende, radial innere Einschnittzone und zumindest eine bogenförmig verlaufende, mittlere Einschnittzone aufweist und wobei der Einschnitt außerhalb des gewellt verlaufenden Einschnittabschnitts und außerhalb der mittleren Einschnittzone eine Breite von 0,4 mm bis 2,0 mm aufweist.

Ein derartiger Fahrzeugluftreifen ist beispielsweise aus der DE 10 2017 215 742 A1 bekannt. Der Fahrzeugluftreifen weist einen laufrichtungsgebunden ausgeführten Laufstreifen mit Profilblöcken mit jeweils in Gruppen parallel zueinander sowie zur axialen Richtung unter einem Winkel von 0° bis 45° verlaufenden Einschnitten mit einer konstanten Breite von 0,4 mm bis 1,0 mm und einer maximalen Tiefe von 70 % bis 100 % der Profiltiefe auf. Die Einschnitte weisen vorzugsweise einen in Draufsicht in Form einer harmonischen Trapezwelle verlaufenden Einschnittabschnitt auf, wobei sich jeder Einschnitt und damit auch der Einschnittabschnitt, im Querschnitt in radialer Richtung betrachtet, aus einer gerade verlaufenden, radial äußeren Einschnittzone, einer gerade verlaufenden, radial inneren Einschnittzone und zumindest einer bogenförmig verlaufenden mittleren Einschnittzone zusammensetzt. Innerhalb jeder Gruppe von Einschnitten sind die bogenförmig verlaufenden, mittleren Einschnittzonen gleich orientiert, wobei Gruppen von Einschnitten vorgesehen sind, deren mittleren Einschnittzonen vom einlaufenden Blockrandbereich wegweisen. Die mittleren Einschnittzonen sind innerhalb einer Gruppe von Einschnitten verschieden stark ausgelenkt, wobei die maximale Auslenkung der mittleren Einschnittzone des am nächsten zum einlaufenden Blockrandbereich befindlichen Einschnitts größer ist als die maximale Auslenkung der mittleren Einschnittzone des am nächsten zum auslaufenden Blockrandbereich befindlichen Einschnitts. Die verschieden stark ausgelenkten, mittleren Einschnittzonen sorgen für eine Optimierung des Kippverhaltens der Profilblöcke unter Traktionsbelastung und unter Bremsbelastung, wodurch die Profilblöcke gleichmäßig abreiben.

Aus der DE 10 2019 220 135 A1 ist ein Fahrzeugluftreifen mit einem Laufstreifen mit Profilpositiven mit parallel zueinander sowie zur axialen Richtung unter einem Winkel von 0° bis 50° verlaufenden Einschnitten mit einer Breite von 0,4 mm bis 0,8 mm bekannt. Die Einschnitte weisen einen in Draufsicht in Form einer harmonischen Welle gewellt verlaufenden, mittleren Einschnittabschnitt mit einer der Ausbreitungsrichtung der Welle entsprechenden Wellenmittellinie und zwei randseitige Einschnittabschnitte auf. Der Verlauf der randseitigen Einschnittabschnitte definiert eine parallel zur Wellenmittellinie verlaufende Einschnittbasislinie. Die Wellenmittellinie des mittleren Einschnittabschnitts ist zur Einschnittbasislinie parallelversetzt, wobei ein zwischen der Wellenmittellinie und der Einschnittbasislinie als gegenseitiger lichter Abstand ermittelter Versatz 75% bis 400% der Amplitude der harmonischen Welle beträgt. Diese Einschnitte öffnen sich beim Abplatten des Laufstreifens nur wenig, wodurch die Wahrscheinlichkeit, dass die Einschnitte beispielsweise von Streusplit stammende Steine aufnehmen, reduziert ist.

Es ist bekannt, dass Einschnitte, welche beim Abplatten des Laufstreifens eine ausgeprägte Öffnungsfähigkeit aufweisen, einen signifikanten Beitrag zur Verbesserung der Schneegriffeigenschafen des Reifens leisten können. Bei der Ausführung der Einschnitte ist gleichzeitig darauf zu achten, dass diese die Steifigkeit der jeweiligen Profilpositive nicht zu stark herabsetzen, damit weiterhin gute Handlingeigenschaften auf trockener Fahrbahn gegeben sind. Insbesondere bei Fahrzeugluftreifen der eingangs genannten Art, bei welchen die Laufstreifen deutlich zur axialen Richtung geneigte, insbesondere über die Laufstreifenbreite V-förmig zueinander verlaufenden Querrillen aufweisen, sind in dieser Hinsicht besonders heikel. Fahrzeugluftreifen mit Laufstreifen mit solchen Querrillen sind bekannter Weise jedoch für das Wasserdrainageverhalten vorteilhaft.

Der Erfindung liegt daher die Aufgabe zugrunde, bei einem Fahrzeugluftreifen der eingangs genannten Art die Schneegriffeigenschaften und die Handlingeigenschaften auf trockener Fahrbahn auf günstigere Weise als bisher auszubalancieren.

Gelöst wird die gestellte Aufgabe erfindungsgemäß dadurch, dass der gewellt verlaufende Einschnittabschnitt, in Draufsicht betrachtet, über ein ganzzahliges Vielfaches der Wellenlänge reicht und zwischen zwei gerade oder zwischen zwei durchgehend gebogen sowie jeweils miteinander fluchtend verlaufenden, weiteren Einschnittabschnitten verläuft, welche eine zur Wellenmittellinie des gewellt verlaufenden Einschnittabschnitts parallelverschobene Einschnittbasislinie definieren, wobei ein zwischen der Wellenmittellinie und der auslaufenden Einschnittkante ermittelter lichter Abstand kleiner ist als ein zwischen der Wellenmittellinie und der einlaufenden Einschnittkante ermittelter lichter Abstand, wobei sich die mittlere Einschnittzone in jeden weiteren Einschnittabschnitt hinein erstreckt und in diesem endet und wobei die Einschnittwände in den weiteren Einschnittabschnitten außerhalb der mittleren Einschnittzone unstrukturierte, die mittlere Einschnittzone umgebende Wandabschnitte sind.

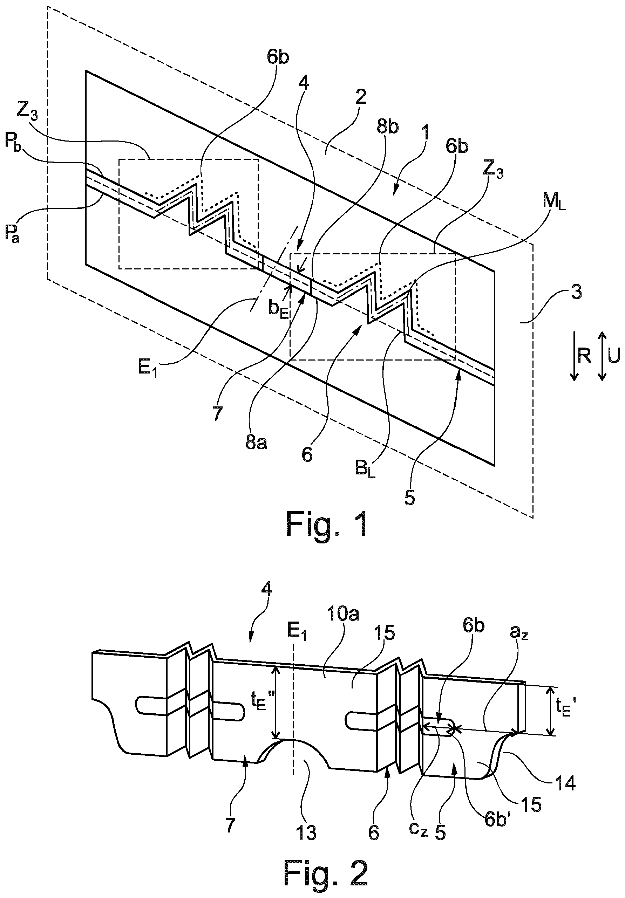

Der gewellt verlaufende Einschnittabschnitt weist daher in Draufsicht eine W-Form oder eine auf der W-Form speziell aufbauende Wellenform auf und bildet in Kombination mit der bogenförmig verlaufenden mittleren Einschnittzone, welche den gewellt verlaufenden Einschnittabschnitt gewissermaßen kreuzt (siehe Fig. 2), eine besonders effiziente Verkeilungs- und Abstützungsstruktur im Einschnitt, wodurch sich die an den Einschnitten angrenzenden Profilpositivsegmente auf eine für den Schneegriff und die Handlingeigenschaften besonders vorteilhafte Weise gegenseitig aneinander abstützen.

Gemäß einer bevorzugten Ausführung ist die mittlere Einschnittzone durch einen an der von der einlaufenden Einschnittkante ausgehenden Einschnittwand ausgebildeten Vorsprung und eine an der von der auslaufenden Einschnittkante ausgehenden Einschnittwand ausgebildeten Vertiefung gebildet. Dies verbessert die Öffnungsfähigkeit des Einschnitts beim Durchlaufen der Bodenaufstandsfläche, wodurch die Schneegriffeigenschaften des Reifens weiter verbessert sind.

Eine weitere bevorzugte Ausführung ist dadurch gekennzeichnet, dass der gewellt verlaufende Einschnittabschnitt über bis zu 6,0 Wellenlängen, bevorzugt über bis zu 4,0 Wellenlängen und besonders bevorzugt genau über 2,0 Wellenlängen reicht. Solche Einschnittabschnitte sorgen im Hinblick auf die Handlingeigenschaften für besonders vorteilhafte Abstützungseffekte im Einschnittinneren, insbesondere unter Querbelastung.

Gemäß einer weiteren bevorzugten Ausführung weist der gewellt verlaufende Einschnittabschnitt zumindest außerhalb der mittleren Einschnittzone eine senkrecht zur Einschnittmittelfläche ermittelte konstante Breite auf, welche um zumindest 0,2 mm, insbesondere um zumindest 0,4 mm, kleiner ist als die Breite des Einschnitts, welche außerhalb des gewellt verlaufenden Einschnittabschnitts und außerhalb der mittleren Einschnittzone vorliegt. Dies trägt ebenfalls zu einer Verbesserung der Abtstützungseffekte im Einschnittinneren bei, sodass die Handlingeigenschaften weiter verbessert sind.

Eine vorteilhafte Weiterbildung der letztgenannten bevorzugten Ausführung besteht darin, dass die mittlere Einschnittzone eine Breite aufweist, welche zumindest 0,4 mm, bevorzugt zumindest 0,6 mm, beträgt und welche um 0,2 mm bis 0,6 mm kleiner ist als die Breite des gewellt verlaufenden Einschnittabschnitts außerhalb der mittleren Einschnittzone. Vereinfacht zusammengefasst, ist daher der in Draufsicht gewellt verlaufende Einschnittabschnitt schmäler als die sonstigen in Draufsicht vorliegenden Einschnittabschnitte und die mittlere Einschnittzone ist nochmals schmäler als der gewellt verlaufende Einschnittabschnitt. Durch die besonders schmal ausgeführte mittlere Einschnittzone treten schon unter geringer Belastung, insbesondere beim Bremsen, besonders effektive und vorteilhafte Abstützeffekte auf, sodass die Steifigkeit der Profilblöcke oder Profilbänder mit solchen Einschnitten mehr als bisher erhöht wird. In der Folge sind die Handlingeigenschaften, insbesondere die Kraftübertragung zum Untergrund, verbessert.

Gemäß einer weiteren bevorzugten Ausführung, welche eine Alternative zur zuletzt genannten bevorzugten Ausführung darstellt, ist weist die mittlere Einschnittzone eine Breite auf, welche zumindest 0,4 mm, insbesondere zumindest 0,6 mm, beträgt und welche um zumindest 0,2 mm bis 0,6 mm kleiner ist als die Breite des Einschnitts, welche außerhalb des gewellt verlaufenden Einschnittabschnitts und außerhalb der mittleren Einschnittzone vorliegt. Auch bei dieser Ausführung treten - bedingt durch die schmal ausgeführte mittlere Einschnittzone - bereits unter geringer Belastung, insbesondere beim Bremsen, besonders effektive und vorteilhafte Abstützeffekte auf, sodass die Steifigkeit der Profilblöcke oder Profilbänder mit solchen Einschnitten mehr als bisher erhöht und folglich die Handlingeigenschaften verbessert sind.

Eine weitere bevorzugte Ausführung ist dadurch gekennzeichnet, dass sich die mittlere Einschnittzone jeweils mit einem Zonenendabschnitt mit einer parallel zur Laufstreifenperipherie ermittelten, auf die Einschnittmittelfläche bezogenen, maximalen Länge von 0,5 mm bis 2,0 mm in die weiteren Einschnittabschnitte hinein erstreckt. Dadurch setzen sich die vorteilhaften Abstützeffekte in einem gewissen Ausmaß in den weiteren Einschnittabschnitten fort, wobei durch die in ihrer Länge entsprechend begrenzte mittlere Einschnittzone in den weiteren Einschnittabschnitten vor allem ein gutes Wasseraufnahmevermögen des Einschnitts erhalten bleibt. Dies trägt somit dazu bei, die Schneegriffeigenschaften, die Handlingeigenschaften auf trockener Fahrbahn und zusätzlich das Wasserdrainagevermögen auf günstigere Weise als bisher auszubalancieren.

Bevorzugter Weise liegt zwischen der Wellenmittellinie und der Einschnittbasislinie ein als kleinstmöglicher Abstand ermittelter Versatz vor, welcher 75 % bis 200 %, insbesondere bis zu 175 %, bevorzugt 80 % bis 120 %, besonders bevorzugt 90 % bis 110 %, der Amplitude der harmonischen Welle des gewellt verlaufenden Einschnittabschnitts beträgt. Dies trägt zu weiteren Verbesserung der Abstützeffekte bei.

Eine weitere bevorzugten Ausführung ist dadurch gekennzeichnet,
a) dass der gewellt verlaufende Einschnittabschnitt eine Amplitude von 75 % bis 225 %, insbesondere von 90 % bis 220 %, bevorzugt von bis zu 175 %, besonders bevorzugt von bis zu 150%, am meisten bevorzugt von bis zu 120 %, der Breite des Einschnitts, welche außerhalb des gewellt verlaufenden Einschnittabschnitts und außerhalb der mittleren Einschnittzone vorliegt, aufweist und/oder
b) dass der gewellt verlaufende Einschnittabschnitt eine Wellenlänge von 300 % bis 600 %, insbesondere von 340 % bis 580 %, bevorzugt von bis zu 400 %, der Breite des Einschnitts, welche außerhalb des gewellt verlaufenden Einschnittabschnitts und außerhalb der mittleren Einschnittzone vorliegt, aufweist.

Auch diese Maßnahmen tragen zu einer zusätzlichen Verbesserung der unter Belastung auftretenden Abtstützungseffekte im Einschnittinneren bei.

Gemäß einer weiteren bevorzugten Ausführung setzt sich der gewellt verlaufende Einschnittabschnitt, im Querschnitt betrachtet, aus der radial äußeren Einschnittzone, der radial inneren Einschnittzone und der bogenförmig verlaufenden, mittleren Einschnittzone zusammen.

Eine weitere bevorzugte Ausführung ist dadurch gekennzeichnet, dass die radial äußere Einschnittzone eine auf die Einschnittmittelfläche bezogene, in radialer Richtung ermittelte Länge von 5 % bis 40 %, insbesondere von 20 % bis 30 %, der maximalen Tiefe des Einschnitts aufweist. Die mittlere Einschnittzone befindet sich daher in einer entsprechenden Tiefe, was für die Abstützungseffekte vorteilhaft ist.

Ferner ist es bevorzugt, wenn die mittlere Einschnittzone eine auf die Einschnittmittelfläche bezogene, in radialer Richtung ermittelte Länge von 10 % bis 50 %, insbesondere von 20 % bis 40 %, der maximalen Tiefe des Einschnitts aufweist. Auch diese Ausführung ist für die Abstützungseffekte vorteilhaft.

Eine weitere bevorzugte Ausführung ist dadurch gekennzeichnet, dass die mittlere Einschnittzone eine Symmetrieebene aufweist, welche in einer in radialer Richtung ermittelten, konstanten Tiefe von insbesondere 25 % bis 60 %, bevorzugt von bis zu 50 %, der maximalen Tiefe des Einschnitts verläuft. Die mittlere Einschnittzone befindet sich daher in einer entsprechenden Tiefe, was ebenfalls für Abstützungseffekte vorteilhaft ist.

Eine noch weitere bevorzugte Ausführungsform besteht darin, dass in jedem weiteren Einschnittabschnitt zumindest eine, insbesondere genau eine, Grundanhebung ausgebildet ist, wobei jeder weitere Einschnittabschnitt im Bereich der Grundanhebung an seiner seichtesten Stelle in radialer Richtung eine Tiefe von 30 % bis 75 % der maximalen Tiefe des Einschnitts aufweist und wobei die Grundanhebung vorzugsweise außerhalb des Bereichs der mittleren Einschnittzone ausgebildet ist, sodass die mittlere Einschnittzone und die Grundanhebung in radialer Richtung nicht überlappen. Die Grundanhebung(en) erhöht bzw. erhöhen die Steifigkeit der Profilpositive, wodurch die Handlingeigenschaften auf trockener Fahrbahn weiter verbessert sind.

Weitere bevorzugte Ausführungen sind dadurch gekennzeichnet, dass sich die Einschnitte, in Draufsicht betrachtet, jeweils aus einem einzigen gewellt verlaufende Einschnittabschnitt und den zwei weiteren Einschnittabschnitten zusammensetzen und/oder dass sich die Einschnitte, in Draufsicht betrachtet, aus zwei gewellt verlaufenden Einschnittabschnitten und drei mit diesen alternierend ausgebildeten, weiteren Einschnittabschnitten zusammensetzen und/oder dass die Einschnitte, in Draufsicht betrachtet, jeweils bezüglich einer in radialer Richtung ausgerichteten, in Draufsicht senkrecht zur Erstreckungsrichtung des Einschnitts sowie bezüglich der Längserstreckung des Einschnitts durch die Mitte des Einschnitts verlaufende Querschnitt-Mittelebene symmetrisch ausgeführt sind.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf einen Profilblock eines Laufstreifens eines Fahrzeugluftreifens mit einer Ausführungsvariante der Erfindung,
Fig. 2 eine Visualisierung eines Einschnitts (Abzugskörper des Einschnitts),
Fig. 3 eine vergrößerte Draufsicht auf das Detail Z₃ der Fig. 1 und
Fig. 4 einen Schnitt gemäß der Linie IV-IV der Fig. 3.

Gemäß der Erfindung ausgeführte Fahrzeugluftreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Reifen in Radialbauart für Felgen mit einem Felgendurchmesser von 18, 19, 20, 21, 22 oder 23 Zoll.

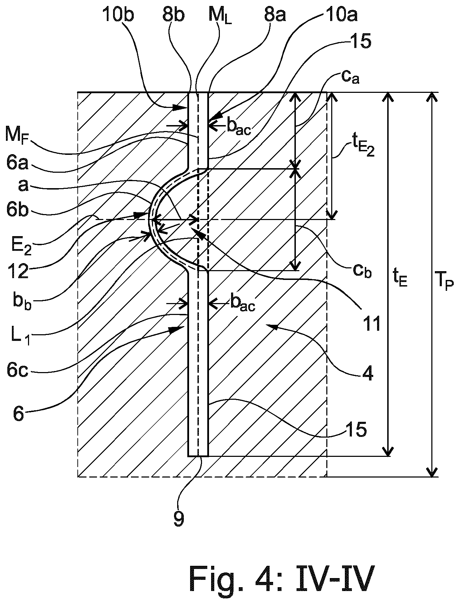

Fig. 1 zeigt eine Draufsicht auf einen in axialer Richtung langgestreckt parallelogrammförmigen, mittleren Profilblock 1 eines Laufstreifens eines Fahrzeugluftreifens. Die Umfangsrichtung des Fahrzeugluftreifens ist durch einen Doppelpfeil U angedeutet. Der mittlere Profilblock 1 ist in den beiden Umfangsrichtungen durch Querrillen 2 sowie seitlich durch Umfangsrillen 3 oder Rillenabschnitte von Umfangsrillen 3 begrenzt. Die Querrillen 2 trennen den mittleren Profilblock 1 von weiteren nicht gezeigten und jeweils insbesondere analog gestalteten mittleren Profilblöcken, sodass der mittlere Profilblock 1 zu einer in Umfangsrichtung umlaufenden Profilblockreihe gehört. Beim Ausführungsbeispiel sind die Querrillen 2 und die Umfangsrillen 3 in radialer Richtung auf die jeweils vorgesehene Profiltiefe T_{P} (angedeutet in Fig. 4) von üblicherweise 6,5 mm bis 13,0 mm ausgeführt. Es können jedoch auch ausschließlich die Querrillen 2 oder ausschließlich die Umfangsrillen 3 auf die Profiltiefe T_{P} ausgeführt sein. Die Querrillen 2 verlaufen in Draufsicht gerade, parallel zueinander sowie zur axialen Richtung unter einem Winkel von 0° bis 50°, insbesondere von 5° bis 45°.

Der die Profilblöcke 1 aufweisende Laufstreifen ist auf nicht gezeigte Weise laufrichtungsgebunden ausgeführt, wobei der Fahrzeugluftreifen derart an einem Fahrzeug, etwa einem PKW, zu montieren ist, dass er die durch den Pfeil R symbolisierte Abrollrichtung bei Vorwärtsfahrt aufweist.

Im Profilblock 1 ist ein den Profilblock 1 durchquerender Einschnitt 4 ausgebildet, welcher sich, in Draufsicht betrachtet, insgesamt gerade erstreckt, in die Umfangsrillen 3 einmündet und sich aus zwei randseitigen Einschnittabschnitten 5, zwei wellenförmig verlaufenden Einschnittabschnitten 6 und einem zwischen diesen verlaufenden, zentralen Einschnittabschnitt 7 zusammensetzt. Die randseitigen Einschnittabschnitte 5 und der zentrale Einschnittabschnitt 7 verlaufen, in Draufsicht betrachtet, jeweils gerade sowie miteinander fluchtend.

Der Einschnitt 4 weist an der Laufstreifenperipherie eine beim Abrollen des Reifens bei Vorwärtsfahrt (Pfeil R) zuerst in den Untergrund eintretende, einlaufende Einschnittkante 8a und eine auslaufende Einschnittkante 8b auf, wobei beim Abrollen des Reifens bei Vorwärtsfahrt auf der einlaufenden Einschnittkante 8a liegende Punkte Pₐ jeweils vor dem exakt in Umfangsrichtung gegenüberliegenden, auf der auslaufenden Einschnittkante 8b liegenden Punkt P_{b} in den Untergrund eintreten. In Fig. 1 sind zwei solcher Punkte Pₐ, P_{b} exemplarisch eingezeichnet.

Der Einschnitt 4 ist durch einen Einschnittgrund 9 (Fig. 4), eine von der einlaufenden Einschnittkante 8a ausgehende Einschnittwand 10a (Fig. 4) und eine von der auslaufenden Einschnittkante 8b ausgehende Einschnittwand 10b (Fig. 4) begrenzt.

Wie noch genauer erläutert wird, weist der Einschnitt 4 im Bereich der wellenförmig verlaufenden Einschnittabschnitte 6 jeweils eine sich in den angrenzenden randseitigen Einschnittabschnitt 5 und den zentralen Einschnittabschnitt 7 hinein erstreckende, eine Ausbauchung bildende, mittlere Einschnittzone 6b (in Fig. 1 gestrichelt angedeutet, vergl. Fig. 2 und Fig. 4) auf. Im Bereich außerhalb der wellenförmig verlaufenden Einschnittabschnitte 6 und der mittleren Einschnittzone 6b sind die Einschnittwände 10a, 10b von unstrukturierten, einheitlichen, beim Ausführungsbeispiel ebenen, in radialer Richtung verlaufenden Wandabschnitten 15 (Fig. 2, Fig. 4) gebildet. Die Wandabschnitte 15 sind also frei von Vorsprüngen, welche vom Niveau der Einschnittwand 10a, 10b abragen, sowie frei von Vertiefungen, welche gegenüber dem Niveau der Einschnittwand 10a, 10b in diese hineinragen.

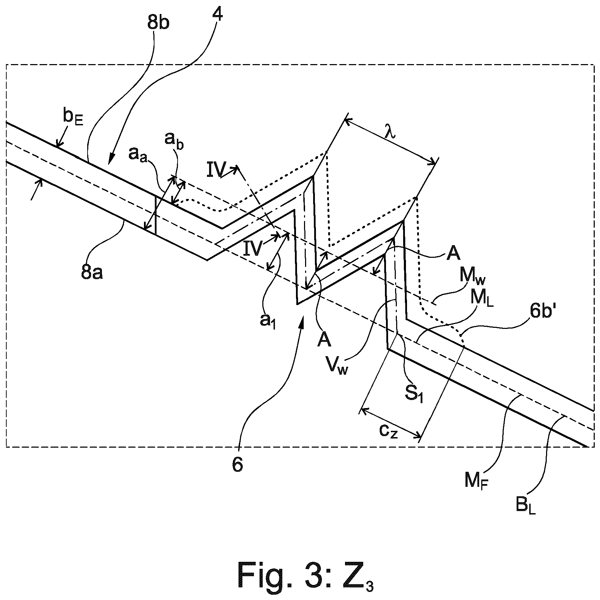

Der Einschnitt 4 weist in radialer Richtung eine maximale Tiefe t_{E} (Tiefe an der tiefsten Stelle, Fig. 4) auf, welche 70% bis 100% der Profiltiefe T_{P} (Fig. 4), insbesondere höchstens der um 0,5 mm verringerten Profiltiefe T_{P}, beträgt, wobei jeder Einschnittabschnitt 5, 6, 7 zumindest abschnittsweise auf die maximale Tiefe t_{E} ausgeführt ist (Fig. 2). Der Einschnitt 4 weist ferner in jenen Bereichen, welche sich außerhalb der wellenförmig verlaufenden Einschnittabschnitte 6 und außerhalb der mittleren Einschnittzonen 6b befinden, eine als kleinstmöglichen Abstand zwischen den Einschnittwänden 10a, 10b ermittelte, konstante Breite b_{E} (Fig. 3) von 0,4 mm bis 2,0 mm, insbesondere von bis zu 1,6 mm, auf.

Der Einschnitt 4 weist darüber hinaus eine in Draufsicht dem Einschnittverlauf folgende Einschnittmittellinie M_{L} (Fig. 3), eine von dieser ausgehende, zu den Einschnittwänden 10a, 10b (Fig. 4) übereinstimmend beabstandete Einschnittmittelfläche M_{F} (Fig. 4) und eine in Draufsicht gerade sowie mittig durch die randseitigen Einschnittabschnitte 5 und mittig durch den zentralen Einschnittabschnitt 7 verlaufende Einschnittbasislinie B_{L} (Fig. 3) auf, bezüglicher welcher der Einschnitt 4 parallel zu den Querrillen 2 verläuft. Die Einschnittmittellinie M_{L} und die Einschnittbasislinie B_{L} fallen im Bereich der Einschnittabschnitte 5, 7 zusammen. Der Einschnitt 4 ist bezüglich einer in radialer Richtung ausgerichteten, in Draufsicht senkrecht zur Einschnittbasislinie B_{L} verlaufenden Querschnitt-Mittelebene E₁ (vergl. Fig. 2, in Fig. 2 lediglich angedeutet), welche bezogen auf die Längserstreckung des Einschnitts 4 durch die Mitte des Einschnitts 4 verläuft, symmetrisch ausgeführt.

Nachfolgend wird die Ausgestaltung der Einschnittabschnitte 6 anhand eines einzelnen Einschnittabschnitts 6 weiter erläutert.

Wie Fig. 2 in Kombination mit Fig. 3 zeigt, verläuft der Einschnittabschnitt 6 in Draufsicht (Fig. 3) sowie über seine gesamte Tiefenerstreckung (Fig. 2) in Form einer harmonischen Zickzackwelle mit einer Amplitude A (Fig. 3) und einer Wellenlänge λ (Fig. 3), wobei der Einschnittabschnitt 6 über 2,0 Wellenlängen λ reicht und somit W-förmig ausgeführt ist. Entsprechend der Form einer harmonischen Welle sind die Amplitude A und die Wellenlänge λ jeweils konstant. Die Amplitude A (Fig. 3) beträgt 75 % bis 225 %, insbesondere 90 % bis 220 %, bevorzugt bis 175 %, besonders bevorzugt bis 150 %, am meisten bevorzugt bis 120 %, der Breite b_{E} (Fig. 3) des Einschnitts 4 und die Wellenlänge λ (Fig. 3) beträgt 300 % bis 600 %, insbesondere 340 % bis 580 %, bevorzugt bis zu 400 %, der Breite b_{E} (Fig. 3) des Einschnitts 4. In Fig. 3 ist eine der Ausbreitungsrichtung der Welle des Einschnittabschnitts 6 entsprechende, im Ausführungsbeispiel gerade verlaufende Wellenmittellinie Mw und eine mittig dem Wellenverlauf des Einschnittabschnitts 6 folgende Wellenverlauflinie Vw, welche einen Abschnitt der Einschnittmittellinie M_{L} bildet, eingezeichnet. Die Wellenlänge λ und die Amplitude A beziehen sich jeweils auf die Wellenverlauflinie Vw, wobei die Amplitude A in bekannter Weise relativ zur Wellenmittellinie Mw ermittelt ist. Die Einschnittbasislinie B_{L} und die Wellenmittellinie Mw verlaufen parallel zueinander. Die Ausgestaltung des Einschnittabschnitts 6 ist derart, dass die Wellenmittellinie Mw zur Einschnittbasislinie B_{L} in Umfangsrichtung versetzt ist, sodass zwischen der Wellenmittellinie Mw und der Einschnittbasislinie B_{L} ein als kleinstmöglicher Abstand ermittelter Versatz a₁ vorliegt, wobei ein zwischen der Wellenmittellinie Mw und der auslaufenden Einschnittkante 8b ermittelter lichter Abstand a_{b} kleiner ist als ein zwischen der Wellenmittellinie Mw und der einlaufenden Einschnittkante 8a ermittelter lichter Abstand aₐ. Die lichten Abstände aₐ, a_{b} sind daher in Draufsicht senkrecht zur Wellenmittellinie Mw und senkrecht zur Einschnittbasislinie B_{L} ermittelt. Der Versatz a₁ beträgt 75 % bis 200 %, insbesondere bis zu 175 %, bevorzugt 80 % bis 120 %, besonders bevorzugt 90 % bis 110 %, der Amplitude A.

Gemäß Fig. 4 setzt sich der Einschnittabschnitt 6, im in Draufsicht senkrecht zur Einschnittmittellinie M_{L} verlaufenden Querschnitt betrachtet (vergl. Lage der Linie IV-IV in Fig. 3), aus einer in radialer Richtung verlaufenden, radial äußeren Einschnittzone 6a, der bereits erwähnten mittleren Einschnittzone 6b und einer in radialer Richtung verlaufenden, radial inneren Einschnittzone 6c zusammen. Der Einschnittabschnitt 6 weist im Bereich außerhalb der mittleren Einschnittzone 6b eine senkrecht zur Einschnittmittelfläche M_{F} ermittelte konstante Breite b_{ac} auf, welche 0,4 mm bis 2,0 mm beträgt und vorzugsweise um zumindest 0,2 mm, insbesondere um zumindest 0,4 mm, kleiner ist als die Breite b_{E} (Fig. 2) des Einschnitts 4.

Die weitere Beschreibung der Einschnittzonen 6a, 6b, 6c bezieht sich auf den erwähnten Querschnitt.

Die radial äußere Einschnittzone 6a weist eine auf die Einschnittmittelfläche M_{F} bezogene, in radialer Richtung ermittelte Länge cₐ von 5 % bis 40 %, insbesondere von 20 % bis 30 %, der maximalen Tiefe t_{E} auf.

Die radial innere Einschnittzone 6c verläuft in Fortsetzung zur radial äußeren Einschnittzone 6a.

Die mittlere Einschnittzone 6b verläuft bogenförmig, insbesondere entlang eines Kreisbogens, bildet die bereits erwähnte Ausbauchung, weist eine auf die Einschnittmittelfläche M_{F} bezogene, in radialer Richtung ermittelte Länge c_{b} von 10 % bis 50 %, insbesondere von 20 % bis 40 %, der maximalen Tiefe t_{E}, eine senkrecht zur Einschnittmittelfläche M_{F} ermittelte konstante Breite b_{b} und eine in einer in radialer Richtung ermittelten, konstanten Tiefe t_{E2} verlaufende Symmetrieebene E₂ auf. Im Hinblick auf die Symmetrieebene E₂ bleibt die Reifenkrümmung unberücksichtigt. Die Breite b_{b} beträgt zumindest 0,4 mm, bevorzugt zumindest 0,6 mm, und ist um 0,2 mm bis 0,6 mm kleiner als die Breite b_{ac}. Die Längen cₐ, c_{b} sind vorzugsweise derart aufeinander abgestimmt, dass die Tiefe t_{E2} 25 % bis 60 %, insbesondere bis zu 50 %, der maximalen Tiefe t_{E} beträgt. In Fig. 4 ist eine die Einschnittmittelfläche M_{F} zwischen der radial äußeren Einschnittzone 6a und der radial inneren Einschnittzone 6c verbindende, gerade verlaufende Bezugslinie L₁ eingezeichnet. Die mittlere Einschnittzone 6b weist in der Symmetrieebene E₂ eine zwischen der Bezugslinie L₁ und der Einschnittmittelfläche M_{F} ermittelte maximale Auslenkung a von 0,5 mm bis 1,5 mm auf.

Die mittlere Einschnittzone 6b ist ferner derart ausgeführt, dass an der von der einlaufenden Einschnittkante 8a ausgehenden Einschnittwand 10a ein kreissegmentförmiger Vorsprung 11 und an der von der auslaufenden Einschnittkante 8b ausgehenden Einschnittwand 10b eine mit dem Vorsprung 11 korrespondierende Vertiefung 12 ausgebildet ist. "Korrespondierend" bedeutet, dass die in der mittleren Einschnittzone 6b vorliegende Breite b_{b} - wie bereits erwähnt - konstant ist. Die Vertiefung 12 ragt gegenüber dem im Bereich der Einschnittzonen 6a, 6c vorliegenden Niveau der Einschnittwand 10b in die Einschnittwand 10b hinein und der Vorsprung 11 ragt gegenüber dem im Bereich der Einschnittzonen 6a, 6c vorliegenden Niveau der Einschnittwand 10a von der Einschnittwand 10a ab.

Wie Fig. 2 zeigt, verläuft die mittlere Einschnittzone 6b jeweils mit einem Zonenendabschnitt 6b' in den zentralen Einschnittabschnitt 7 und den jeweils angrenzenden, randseitigen Einschnittabschnitt 5 hinein, wobei jeder Zonenendabschnitt 6b' eine parallel zur Laufstreifenperipherie ermittelte maximale Länge c_{z} (Fig. 3, Länge an der längsten Stelle) von 0,5 mm bis 2,0 mm aufweist und in einem parallel zur Laufstreifenperipherie und als kleinstmöglichen Abstand ermittelten Abstand a_{z} von vorzugsweise 1,0 mm vor dem Einschnittrand endet, sodass die Zonenendabschnitte 6b' von den jeweiligen unstrukturierten Wandabschnitten 15 U-förmig umlaufen bzw. umgeben sind. Die mittlere Einschnittzone 6b, also die Zonenendabschnitte 6b', endet bzw. enden daher innerhalb der Einschnittabschnitte 5, 7. Gemäß Fig. 3 bezieht sich die maximale Länge c_{z} auf die Einschnittmittelfläche M_{F} bzw. die Einschnittbasislinie B_{L} und ist relativ zu einem Schnittpunkt S₁ der Einschnittbasislinie B_{L} bzw. der Einschnittmittelfläche M_{F} mit der Wellenverlauflinie Vw ermittelt.

Wie Fig. 2 zeigt, sind beim gezeigten Ausführungsbeispiel im zentralen Einschnittabschnitt 7 und in jedem randseitigen Einschnittabschnitt 5 jeweils eine die Tiefe des Einschnitts 4 lokal verringernde Grundanhebung 13 (Einschnittabschnitt 7) bzw. 14 (Einschnittabschnitt 5) ausgebildet, wobei die Grundanhebungen 13, 14 mit den mittleren Einschnittzonen 6b in radialer Richtung nicht überlappen. Die Grundanhebungen 14 in den randseitigen Einschnittabschnitten 5 sind jeweils an den Einschnitteinmündung ausgebildet. Die randseitigen Einschnittabschnitte 5 weisen im Bereich der Grundanhebungen 14 in radialer Richtung jeweils eine minimale Tiefe t_{E}' (Tiefe an der seichtesten Stelle) von 30 % bis 70 %, insbesondere von bis zu 50 %, der maximalen Tiefe t_{E} (Fig. 4) auf. Der zentrale Einschnittabschnitt 7 weist im Bereich der Grundanhebung 13 eine minimale Tiefe t_{E}" von 50 % bis 75 % der maximalen Tiefe t_{E} (Fig. 4) auf.

Die Erfindung ist auf das beschriebene Ausführungsbeispiel nicht beschränkt.

Die Einschnitte weisen jeweils zumindest einen in Draufsicht wellenförmig verlaufenden Einschnittabschnitt auf, welcher zumindest über 2,0 Wellenlängen λ reicht, wobei dieser Einschnittabschnitt zwischen zwei miteinander fluchtend verlaufenden, weiteren Einschnittabschnitten verläuft. Bevorzugt weisen die Einschnitte zwei oder drei solcher wellenförmig verlaufender Einschnittabschnitte auf. Dieser bzw. jeder dieser Einschnittabschnitt(e) verläuft bevorzugt über bis zu 6,0 Wellenlängen λ, insbesondere über bis zu 4,0 Wellenlängen λ.

Die dem bzw. den wellenförmig verlaufenden Einschnittabschnitt(en) zugrundeliegende harmonische Welle ist eine Zickzackwelle, insbesondere eine Zickzackwelle mit abgerundeten "Wellenspitzen", eine geschwungene Welle oder eine Trapezwelle. Zu den Zickzackwellen gehören gleichmäßige Zickzackwellen, beispielsweise Wellen, die auf gleichschenkeligen Dreiecken basieren, und ungleichmäßige Zickzackwellen, beispielsweise Sägezahnwellen.

Im Bereich des bzw. jedes wellenförmig verlaufenden Einschnittabschnitts können mehrere, insbesondere zwei, in radialer Richtung übereinander angeordnete, je eine Ausbauchung bildende, mittlere Einschnittzonen vorgesehen sein.

Die Einschnittabschnitte können bezogen auf die Einschnittbasislinie B_{L} und die Wellenmittellinie Mw in Draufsicht durchgehend gebogen (kreisbogenartig) verlaufen. Der Versatz a₁ (siehe Fig. 3) sowie die Abstände aₐ, a_{b} (siehe Fig. 3) beziehen sich bei diesen Varianten jeweils auf zwei parallel zueinander verlaufende Tangenten, welche in Draufsicht an die durchgehend gebogen verlaufende Einschnittbasislinie B_{L} bzw. an die in Draufsicht durchgehend gebogen verlaufende Wellenmittellinie Mw bzw. an die in Draufsicht durchgehend gebogen verlaufende jeweilige Einschnittkante angelegt sind. Die Ermittlung des Versatzes a₁ und der Abstände aₐ, a_{b} erfolgt in Draufsicht senkrecht zu den Tangenten.

Die Einschnitte können in beliebigen Profilpositiven, daher beispielsweise auch in in Umfangsrichtung umlaufenden Profilrippen, ausgebildet sein, wobei die Einschnitte ein- oder beidseitig innerhalb der Profilpositive enden können, sodass diese die Profilpositive nicht durchqueren. Bevorzugt durchqueren die Einschnitte die Profilpositive, wobei bei schulterseitigen Profilpositiven unter durchquerenden Einschnitten solche Einschnitte verstanden werden, welche die Profilpositive zumindest innerhalb der Bodenaufstandsfläche durchqueren. Die Bodenaufstandsfläche entspricht dem statisch ermittelten Footprint (ermittelt mit einem auf einer Normfelge montierten Reifen, Last bei 70 % der maximalen Tragfähigkeit, Innendruck 85 % des Normdruckes, gemäß ETRTO-Standards). Die Einschnitte verlaufen zur axialen Richtung unter einem Winkel von 0° bis 50°, insbesondere von 10° bis 45°, wobei sich der Winkel bei Einschnitten mit gerade verlaufender Einschnittbasislinie B_{L} auf die Einschnittbasislinie B_{L} und bei Einschnitten mit gebogen verlaufender Einschnittbasislinie B_{L} auf eine die Enden der Einschnittbasislinie B_{L} verbindende gerade Linie bezieht. Ferner verlaufen die Einschnitte vorzugsweise zumindest in Gruppen und insbesondere zumindest innerhalb des jeweiligen Profilpositivs parallel zueinander.

Die Grundanhebungen in den Einschnitten sind optional.

### Bezugszeichenliste

- 1: mittlerer Profilblock
- 2: Querrille
- 3: Umfangsrille
- 4: Einschnitt
- 5: randseitiger Einschnittabschnitt
- 6.: wellenförmig verlaufender Einschnittabschnitt
- 6a: radial äußere Einschnittzone
- 6b: mittlere Einschnittzone
- 6b': Zonenendabschnitt
- 6c: radial innere Einschnittzone
- 7: zentraler Einschnittabschnitt
- 8a: einlaufende Einschnittkante
- 8b: auslaufende Einschnittkante
- 9: Einschnittgrund
- 10a: Einschnittwand
- 10b: Einschnittwand
- 11: Vorsprung
- 12: Vertiefung
- 13: Grundanhebung
- 14: Grundanhebung
- 15: Wandabschnitt
- A: Amplitude
- a: Auslenkung
- a₁: Versatz
- aₐ, a_{b}: lichter Abstand
- a_{z}.: Abstand
- b_{ac}, b_{b}, b_{E}: Breite
- cₐ, c_{b}: Länge
- c_{z}: maximale Länge
- B_{L}: Einschnittbasislinie
- E₁: Querschnitt-Mittelebene
- E₂: Symmetrieebene
- L₁: Bezugslinie
- M_{F}: Einschnittmittelfläche
- M_{L}: Einschnittmittellinie
- M_{W}: Wellenmittellinie
- Pₐ, P_{b}: Punkt
- R: Pfeil (Abrollrichtung)
- S₁: Schnittpunkt
- t_{E}: maximale Tiefe
- t_{E}', t_{E}": minimale Tiefe
- t_{E2}: Tiefe
- T_{P}: Profiltiefe
- U: Doppelpfeil (Umfangsrichtung)
- Vw: Wellenverlauflinie
- Z₃: Detail
- λ: Wellenlänge

## Patentansprüche

1. Fahrzeugluftreifen mit einem laufrichtungsgebunden ausgeführten Laufstreifen mit durch Rillen (2, 3) begrenzten Profilpositiven (1) mit in Draufsicht zur axialen Richtung unter einem Winkel von 0° bis zu 50° verlaufenden, die Profilpositive (1) insbesondere durchquerenden Einschnitten (4), welche jeweils eine maximale Tiefe (t_{E}) von 70% bis 100% der Profiltiefe (T_{P}), zwei Einschnittwände (10a, 10b), eine beim Abrollen des Reifens bei Vorwärtsfahrt (Pfeil R) zuerst in den Untergrund eintretende, einlaufende Einschnittkante (8a), eine auslaufende Einschnittkante (8b) und jeweils zumindest einen über seine gesamte Tiefenerstreckung in Draufsicht in Form einer harmonischen Welle gewellt verlaufenden Einschnittabschnitt (6) mit einer der Ausbreitungsrichtung der Welle entsprechenden Wellenmittellinie (Mw) aufweisen, wobei der gewellt verlaufende Einschnittabschnitt (6) über zumindest 2,0 Wellenlängen (λ) reicht und, im Querschnitt betrachtet, eine gerade verlaufende, radial äußere Einschnittzone (6a), eine gerade verlaufende, radial innere Einschnittzone (6c) und zumindest eine bogenförmig verlaufende, mittlere Einschnittzone (6b) aufweist und wobei der Einschnitt (4) außerhalb des gewellt verlaufenden Einschnittabschnitts (6) und außerhalb der mittleren Einschnittzone (6b) eine Breite (b_{E}) von 0,4 mm bis 2,0 mm aufweist,
**dadurch gekennzeichnet,**
**dass** der gewellt verlaufende Einschnittabschnitt (6), in Draufsicht betrachtet, über ein ganzzahliges Vielfaches der Wellenlänge (λ) reicht und zwischen zwei gerade oder zwischen zwei durchgehend gebogen sowie jeweils miteinander fluchtend verlaufenden, weiteren Einschnittabschnitten (5, 7) verläuft, welche eine zur Wellenmittellinie (M_{W}) des gewellt verlaufenden Einschnittabschnitts (6) parallelverschobene Einschnittbasislinie (B_{L}) definieren, wobei ein zwischen der Wellenmittellinie (Mw) und der auslaufenden Einschnittkante (8b) ermittelter lichter Abstand (a_{b}) kleiner ist als ein zwischen der Wellenmittellinie (Mw) und der einlaufenden Einschnittkante (8a) ermittelter lichter Abstand (aₐ), wobei sich die mittlere Einschnittzone (6b) in jeden weiteren Einschnittabschnitt (5, 7) hinein erstreckt und in diesem endet und wobei die Einschnittwände (10a, 10b) in den weiteren Einschnittabschnitten (5, 7) außerhalb der mittleren Einschnittzone (6b) unstrukturierte, die mittlere Einschnittzone (6b) umgebende Wandabschnitte (15) sind.

2. Fahrzeugluftreifen nach Anspruch 1, **dadurch gekennzeichnet, dass** die mittlere Einschnittzone (6b) durch einen an der von der einlaufenden Einschnittkante (8a) ausgehenden Einschnittwand (10a) ausgebildeten Vorsprung (11) und eine an der von der auslaufenden Einschnittkante (8b) ausgehenden Einschnittwand (10b) ausgebildeten Vertiefung (12) gebildet ist.

3. Fahrzeugluftreifen nach Anspruch 1 oder 2, **dadurch gekennzeichnet, dass** der gewellt verlaufende Einschnittabschnitt (6) über bis zu 6,0 Wellenlängen (λ), bevorzugt über bis zu 4,0 Wellenlängen (λ), und besonders bevorzugt genau über 2,0 Wellenlängen (λ) reicht.

4. Fahrzeugluftreifen nach einem der Ansprüche 1 bis 3, **dadurch gekennzeichnet, dass** der gewellt verlaufende Einschnittabschnitt (6) zumindest außerhalb der mittleren Einschnittzone (6b) eine senkrecht zur Einschnittmittelfläche (M_{F}) ermittelte konstante Breite (b_{ac}) aufweist, welche um zumindest 0,2 mm, insbesondere um zumindest 0,4 mm, kleiner ist als die Breite (b_{E}) des Einschnitts (4), welche außerhalb des gewellt verlaufenden Einschnittabschnitts (6) und außerhalb der mittleren Einschnittzone (6b) vorliegt.

5. Fahrzeugluftreifen nach Anspruch 4, **dadurch gekennzeichnet, dass** die mittlere Einschnittzone (6b) eine Breite (b_{b}) aufweist, welche zumindest 0,4 mm, bevorzugt zumindest 0,6 mm, beträgt und welche um 0,2 mm bis 0,6 mm kleiner als die Breite (b_{ac}) des gewellt verlaufenden Einschnittabschnitts (6) außerhalb der mittleren Einschnittzone (6b).

6. Fahrzeugluftreifen nach einem der Ansprüche 1 bis 4, **dadurch gekennzeichnet, dass** die mittlere Einschnittzone (6b) eine Breite (b_{b}) aufweist, welche zumindest 0,4 mm, insbesondere zumindest 0,6 mm, beträgt und welche um 0,2 mm bis 0,6 mm kleiner ist als die Breite (b_{E}) des Einschnitts (4), welche außerhalb des gewellt verlaufenden Einschnittabschnitts (6) und außerhalb der mittleren Einschnittzone (6b) vorliegt.

7. Fahrzeugluftreifen nach einem der Ansprüche 1 bis 6, **dadurch gekennzeichnet, dass** sich die mittlere Einschnittzone (6b) jeweils mit einem Zonenendabschnitt (6b') mit einer parallel zur Laufstreifenperipherie ermittelten, auf die Einschnittmittelfläche (M_{F}) bezogenen, maximalen Länge (c_{z}) von 0,5 mm bis 2,0 mm in die weiteren Einschnittabschnitte (5, 7) hinein erstreckt.

8. Fahrzeugluftreifen nach einem der Ansprüche 1 bis 7, **dadurch gekennzeichnet, dass** zwischen der Wellenmittellinie (Mw) und der Einschnittbasislinie (B_{L}) ein als kleinstmöglicher Abstand ermittelter Versatz (a₁) vorliegt, welcher 75 % bis 200 %, insbesondere bis zu 175 %, bevorzugt 80 % bis 120 %, besonders bevorzugt von 90 % bis 110 %, der Amplitude (A) der harmonischen Welle des gewellt verlaufenden Einschnittabschnitts (6) beträgt.

9. Fahrzeugluftreifen nach einem der Ansprüche 1 bis 8, **dadurch gekennzeichnet,**
a. **dass** der gewellt verlaufende Einschnittabschnitt (6) eine Amplitude (A) von 75 % bis 225 %, insbesondere von 90 % bis 220 %, bevorzugt von bis zu 175 %, besonders bevorzugt von bis zu 150 %, am meisten bevorzugt von bis zu 120 %, der Breite (b_{E}) des Einschnitts (4), welche außerhalb des gewellt verlaufenden Einschnittabschnitts (6) und außerhalb der mittleren Einschnittzone (6b) vorliegt, aufweist und/oder
b. **dass** der gewellt verlaufende Einschnittabschnitt (6) eine Wellenlänge (λ) von 300 % bis 600 %, insbesondere von 340 % bis 580 %, bevorzugt von bis zu 400 %, der Breite (b_{E}) des Einschnitts (4), welche außerhalb des gewellt verlaufenden Einschnittabschnitts (6) und außerhalb der mittleren Einschnittzone (6b) vorliegt, aufweist.

10. Fahrzeugluftreifen nach einem der Ansprüche 1 bis 9, **dadurch gekennzeichnet, dass** sich der gewellt verlaufende Einschnittabschnitt (6), im Querschnitt betrachtet, aus der radial äußeren Einschnittzone (6a), der radial inneren Einschnittzone (6c) und der bogenförmig verlaufenden, mittleren Einschnittzone (6b) zusammensetzt.

11. Fahrzeugluftreifen nach einem der Ansprüche 1 bis 10, **dadurch gekennzeichnet, dass** die radial äußere Einschnittzone (6a) eine auf die Einschnittmittelfläche (M_{F}) bezogene, in radialer Richtung ermittelte Länge (cₐ) von 5 % bis 40 %, insbesondere von 20 % bis 30 %, der maximalen Tiefe (t_{E}) des Einschnitts (4) aufweist.

12. Fahrzeugluftreifen nach einem der Ansprüche 1 bis 11, **dadurch gekennzeichnet, dass** die mittlere Einschnittzone (6b) eine auf die Einschnittmittelfläche (M_{F}) bezogene, in radialer Richtung ermittelte Länge (c_{b}) von 10 % bis 50 %, insbesondere von 20 % bis 40 %, der maximalen Tiefe (t_{E}) des Einschnitts (4) aufweist.

13. Fahrzeugluftreifen nach einem der Ansprüche 1 bis 12, **dadurch gekennzeichnet, dass** die mittlere Einschnittzone (6b) eine Symmetrieebene (E₂) aufweist, welche in einer in radialer Richtung ermittelten, konstanten Tiefe (t_{E2}) von insbesondere 25 % bis 60 %, bevorzugt von bis zu 50 %, der maximalen Tiefe (t_{E}) des Einschnitts (4) verläuft.

14. Fahrzeugluftreifen nach einem der Ansprüche 1 bis 13, **dadurch gekennzeichnet, dass** in jedem weiteren Einschnittabschnitt (5, 7) zumindest eine, insbesondere genau eine, Grundanhebung (13, 14) ausgebildet ist, wobei jeder weitere Einschnittabschnitt (5, 7) im Bereich der Grundanhebung (13, 14) an seiner seichtesten Stelle in radialer Richtung eine Tiefe (t_{E}") von 30 % bis 75 % der maximalen Tiefe (t_{E}) des Einschnitts (4) aufweist und wobei die Grundanhebung (13, 14) vorzugsweise außerhalb des Bereichs der mittleren Einschnittzone (6b) ausgebildet ist, sodass die mittlere Einschnittzone (6b) und die Grundanhebung (13, 14) in radialer Richtung nicht überlappen.

15. Fahrzeugluftreifen nach einem der Ansprüche 1 bis 14, **dadurch gekennzeichnet, dass** sich die Einschnitte (4), in Draufsicht betrachtet, jeweils aus einem einzigen gewellt verlaufende Einschnittabschnitt (6) und den zwei weiteren Einschnittabschnitten (5, 7) zusammensetzen und/oder dass sich die Einschnitte (4), in Draufsicht betrachtet, aus zwei gewellt verlaufenden Einschnittabschnitten (6) und drei mit diesen alternierend ausgebildeten, weiteren Einschnittabschnitten (5, 7) zusammensetzen und/oder dass die Einschnitte (4), in Draufsicht betrachtet, jeweils bezüglich einer in radialer Richtung ausgerichteten, in Draufsicht senkrecht zur Erstreckungsrichtung des Einschnitts (4) sowie bezüglich der Längserstreckung des Einschnitts (4) durch die Mitte des Einschnitts (4) verlaufende Querschnitt-Mittelebene (E₁) symmetrisch ausgeführt sind.

## Claims

1. Pneumatic vehicle tyre having a directional tread having profile positives (1) which are delimited by grooves (2, 3), having sipes (4) which in plan view extend at an angle of 0° to 50° in relation to the axial direction and in particular intersect the profile positives (1), and which have in each case a maximum depth (t_{E}) of 70% to 100% of the profile depth (T_{P}), two sipe walls (10a, 10b), an incoming sipe edge (8a) which during rolling of the tyre in forward travel (arrow R) enter the ground first, an outgoing sipe edge (8b) and in each case at least one sipe portion (6) which in plan view across its entire extent in the depth extends so as to be undulated in the form of a harmonic wave, having a wave centreline (Mw) corresponding to the direction of extent of the wave, wherein the undulated sipe portion (6) extends across at least 2.0 wavelengths (λ) and, when viewed in cross section, has a rectilinear, radially outer sipe zone (6a), a rectilinear, radially inner sipe zone (6c) and at least one arcuate, central sipe zone (6b), and wherein the sipe (4) outside the undulated sipe portion (6) and outside the central sipe zone (6b) has a width (b_{E}) of 0.4 mm to 2.0 mm,
**characterized in that**
the undulated sipe portion (6), viewed in plan view, extends over an integer multiple of the wavelength (λ) and extends between two straight or between two continuously curved and mutually co-aligned further sipe portions (5, 7), which define a sipe baseline (B_{L}) displaced parallel to the wave centreline (Mw) of the undulated sipe portion (6), wherein an available spacing (a_{b}) determined between the wave centreline (Mw) and the outgoing sipe edge (8b) is smaller than an available spacing (aₐ) determined between the wave centreline (M_{W}) and the incoming sipe edge (8a), wherein the central sipe zone (6b) extends into each further sipe portion (5, 7) and ends in the latter, and wherein the sipe walls (10a, 10b) in the further sipe portions (5, 7) outside the central sipe zone (6b) are non-structured wall portions (15) surrounding the central sipe zone (6b).

2. Pneumatic vehicle tyre according to Claim 1, **characterized in that** the central sipe zone (6b) is formed by a projection (11) formed on the sipe wall (10a) proceeding from the incoming sipe edge (8a) and a depression (12) formed on the sipe wall (10b) proceeding from the outgoing sipe edge (8b).

3. Pneumatic vehicle tyre according to Claim 1 or 2, **characterized in that** the undulated sipe portion (6) extends across up to 6.0 wavelengths (λ), preferably across up to 4.0 wavelengths (λ), and particularly preferably precisely across 2.0 wavelengths (λ).

4. Pneumatic vehicle tyre according to one of Claims 1 to 3, **characterized in that** the undulated sipe portion (6) at least outside the central sipe zone (6b) has a constant width (b_{ac}) determined perpendicularly to the sipe central surface (M_{F}), which is at least 0.2 mm, in particular at least 0.4 mm, smaller than the width (b_{E}) of the sipe (4) that is present outside the undulated sipe portion (6) and outside the central sipe zone (6b).

5. Pneumatic vehicle tyre according to Claim 4, **characterized in that** the central sipe zone (6b) has a width (b_{b}) which is at least 0.4 mm, preferably at least 0.6 mm, and which is 0.2 mm to 0.6 mm smaller than the width (b_{ac}) of the undulated sipe portion (6) outside the central sipe zone (6b).

6. Pneumatic vehicle tyre according to one of Claims 1 to 4, **characterized in that** the central sipe zone (6b) has a width (b_{b}) which is at least 0.4 mm, in particular at least 0.6 mm, and which is 0.2 mm to 0.6 mm smaller than the width (b_{E}) of the sipe (4) that is present outside the undulated sipe portion (6) and outside the central sipe zone (6b).

7. Pneumatic vehicle tyre according to one of Claims 1 to 6, **characterized in that** the central sipe zone (6b), in each case by way of a zone end portion (6b') having in terms of the sipe central surface (M_{F}) a maximum length (c_{z}) of 0.5 mm to 2.0 mm, determined parallel to the tread periphery, extends into the further sipe portions (5, 7).

8. Pneumatic vehicle tyre according to one of Claims 1 to 7, **characterized in that** between the wave centreline (Mw) and the sipe baseline (B_{L}) there is an offset (a₁) which is determined as the smallest possible spacing and is 75% to 200%, in particular up to 175%, preferably 80% to 120%, particularly preferably 90% to 110%, of the amplitude (A) of the harmonic wave of the undulated sipe portion (6).

9. Pneumatic vehicle tyre according to one of Claims 1 to 8, **characterized in that**
a. the undulated sipe portion (6) has an amplitude (A) of 75% to 225%, in particular of 90% to 220%, preferably of up to 175%, particularly preferably of up to 150%, most preferably of up to 120%, of the width (b_{E}) of the sipe (4) that is present outside the undulated sipe portion (6) and outside the central sipe zone (6b), and/or
b. the undulated sipe portion (6) has a wavelength (λ) of 300% to 600%, in particular of 340% to 580%, preferably of up to 400%, of the width (b_{E}) of the sipe (4) that is present outside the undulated sipe portion (6) and outside the central sipe zone (6b).

10. Pneumatic vehicle tyre according to one of Claims 1 to 9, **characterized in that** the undulated sipe portion (6), viewed in cross section, consists of the radially outer sipe zone (6a), the radially inner sipe zone (6c) and the arcuate central sipe zone (6b).

11. Pneumatic vehicle tyre according to one of Claims 1 to 10, **characterized in that** the radially outer sipe zone (6a) in terms of the sipe central surface (M_{F}) has a length (cₐ), determined in the radial direction, of 5% to 40%, in particular of 20% to 30%, of the maximum depth (t_{E}) of the sipe (4).

12. Pneumatic vehicle tyre according to one of Claims 1 to 11, **characterized in that** the central sipe zone (6b) in terms of the sipe central surface (M_{F}) has a length (C_{b}), determined in the radial direction, of 10% to 50%, in particular of 20% to 40%, of the maximum depth (t_{E}) of the sipe (4).

13. Pneumatic vehicle tyre according to one of Claims 1 to 12, **characterized in that** the central sipe zone (6b) has a plane of symmetry (E₂) which extends at a constant depth (t_{E2}), determined in the radial direction, of in particular 25% to 60%, preferably of up to 50%, of the maximum depth (t_{E}) of the sipe (4).

14. Pneumatic vehicle tyre according to one of Claims 1 to 13, **characterized in that** at least one, in particular exactly one, raised base (13, 14) is formed in each further sipe portion (5, 7), wherein each further sipe portion (5, 7) in the region of its raised base (13, 14), at its shallowest point in the radial direction, has a depth (t_{E}") of 30% to 75% of the maximum depth (t_{E}) of the sipe (4), and wherein the raised base (13, 14) is preferably formed outside the region of the central sipe zone (6b), so that the central sipe zone (6b) and the raised base (13, 14) do not overlap in the radial direction.

15. Pneumatic vehicle tyre according to one of Claims 1 to 14, **characterized in that** the sipes (4), viewed in plan view, are each composed of a single undulated sipe portion (6) and the two further sipe portions (5, 7) and/or in that the sipes (4), viewed in plan view, consist of two undulated sipe portions (6) and three further sipe portions (5, 7) alternating with said portions (6), and/or in that the sipes (4), viewed in plan view, are in each case embodied symmetrically in terms of a cross-sectional plane (E₁) aligned in the radial direction, and in plan view extending perpendicularly to the direction of extent of the sipe (4), and in terms of the longitudinal extent of the sipe (4) extending through the centre of the sipe (4).

## Revendications

1. Pneumatique de véhicule avec une bande de roulement directionnelle avec des éléments positifs de profil (1) délimités par des rainures (2, 3) avec des incisions (4) s'étendant en vue de dessus par rapport à la direction axiale selon un angle de 0° à 50°, traversant notamment les éléments positifs de profil (1), qui présentent chacune une profondeur maximale (t_{E}) de 70 % à 100 % de la profondeur de profil (T_{P}), deux parois d'incision (10a, 10b), un bord d'incision entrant (8a) qui entre en premier dans le sol lors du roulement du pneu en marche avant (flèche R), un bord d'incision sortant (8b) et respectivement au moins une section d'incision (6) s'étendant de manière ondulée sur toute son extension en profondeur en vue de dessus sous la forme d'une onde harmonique avec une ligne centrale d'onde (Mw) correspondant à la direction de propagation de l'onde, la section d'incision s'étendant de manière ondulée (6) s'étendant sur au moins 2,0 longueurs d'onde (λ) et, vue en coupe transversale, présentant une zone d'incision radialement extérieure (6a) s'étendant en ligne droite, une zone d'incision radialement intérieure (6c) s'étendant en ligne droite et au moins une zone d'incision centrale (6b) s'étendant en forme d'arc, et l'incision (4) présentant une largeur (b_{E}) de 0,4 mm à 2,0 mm en dehors de la section d'incision s'étendant de manière ondulée (6) et en dehors de la zone d'incision centrale (6b),
**caractérisé en ce que**
la section d'incision s'étendant de manière ondulée (6), en vue de dessus, s'étend sur un multiple entier de la longueur d'onde (λ) et s'étend entre deux autres sections d'incision (5, 7) rectilignes ou courbées en continu et respectivement alignées l'une avec l'autre, qui définissent une ligne de base d'incision (B_{L}) décalée parallèlement à la ligne centrale d'onde (Mw) de la section d'incision s'étendant de manière ondulée (6), une distance libre (a_{b}) déterminée entre la ligne centrale d'onde (Mw) et le bord d'incision sortant (8b) étant inférieure à une distance libre (aₐ) déterminée entre la ligne centrale d'onde (M_{W}) et le bord d'incision entrant (8a), la zone d'incision centrale (6b) s'étendant dans chaque autre section d'incision (5, 7) et se terminant dans celle-ci, et les parois d'incision (10a, 10b) dans les autres sections d'incision (5, 7) en dehors de la zone d'incision centrale (6b) étant des sections de paroi (15) non structurées entourant la zone d'incision centrale (6b).

2. Pneumatique de véhicule selon la revendication 1, **caractérisé en ce que** la zone d'incision centrale (6b) est formée par une saillie (11) réalisée sur la paroi d'incision (10a) partant du bord d'incision entrant (8a) et par un creux (12) réalisé sur la paroi d'incision (10b) partant du bord d'incision sortant (8b).

3. Pneumatique de véhicule selon la revendication 1 ou 2, **caractérisé en ce que** la zone d'incision s'étendant de manière ondulée (6) s'étend sur jusqu'à 6,0 longueurs d'onde (λ), de préférence sur jusqu'à 4,0 longueurs d'onde (λ), et de manière particulièrement préférée exactement sur 2,0 longueurs d'onde (λ).

4. Pneumatique de véhicule selon l'une quelconque des revendications 1 à 3, **caractérisé en ce que** la section d'incision s'étendant de manière ondulée (6) présente, au moins à l'extérieur de la zone d'incision centrale (6b), une largeur constante (b_{ac}) déterminée perpendiculairement à la surface centrale d'incision (M_{F}), qui est inférieure d'au moins 0,2 mm, notamment d'au moins 0,4 mm, à la largeur (b_{E}) de l'incision (4), qui est présente à l'extérieur de la section d'incision s'étendant de manière ondulée (6) et à l'extérieur de la zone d'incision centrale (6b).

5. Pneumatique de véhicule selon la revendication 4, **caractérisé en ce que** la zone d'incision centrale (6b) présente une largeur (b_{b}) qui est d'au moins 0,4 mm, de préférence d'au moins 0,6 mm, et qui est inférieure de 0,2 mm à 0,6 mm à la largeur (b_{ac}) de la section d'incision s'étendant de manière ondulée (6) à l'extérieur de la zone d'incision centrale (6b).

6. Pneumatique de véhicule selon l'une quelconque des revendications 1 à 4, **caractérisé en ce que** la zone d'incision centrale (6b) présente une largeur (b_{b}) qui est d'au moins 0,4 mm, notamment d'au moins 0,6 mm, et qui est inférieure de 0,2 mm à 0,6 mm à la largeur (b_{E}) de l'incision (4) qui est présente à l'extérieur de la section d'incision s'étendant de manière ondulée (6) et à l'extérieur de la zone d'incision centrale (6b).

7. Pneumatique de véhicule selon l'une quelconque des revendications 1 à 6, **caractérisé en ce que** la zone d'incision centrale (6b) s'étend respectivement avec une section d'extrémité de zone (6b') d'une longueur maximale (c_{z}), déterminée parallèlement à la périphérie de la bande de roulement, rapportée à la surface centrale d'incision (M_{F}), de 0,5 mm à 2,0 mm dans les autres sections d'incision (5, 7).

8. Pneumatique de véhicule selon l'une quelconque des revendications 1 à 7, **caractérisé en ce qu'**il existe entre la ligne centrale d'onde (Mw) et la ligne de base d'incision (B_{L}) un décalage (a₁) déterminé comme la plus petite distance possible, qui représente 75 % à 200 %, notamment jusqu'à 175 %, de préférence 80 % à 120 %, de manière particulièrement préférée de 90 % à 110 %, de l'amplitude (A) de l'onde harmonique de la section d'incision s'étendant de manière ondulée (6).

9. Pneumatique de véhicule selon l'une quelconque des revendications 1 à 8, **caractérisé**
a. **en ce que** la section d'incision s'étendant de manière ondulée (6) présente une amplitude (A) de 75 % à 225 %, notamment de 90 % à 220 %, de préférence de jusqu'à 175 %, de manière particulièrement préférée de jusqu'à 150 %, de manière la plus préférée de jusqu'à 120 %, de la largeur (b_{E}) de l'incision (4) qui est présente en dehors de la section d'incision s'étendant de manière ondulée (6) et en dehors de la zone d'incision centrale (6b), et/ou
b. **en ce que** la section d'incision s'étendant de manière ondulée (6) présente une longueur d'onde (λ) de 300 % à 600 %, notamment de 340 % à 580 %, de préférence jusqu'à 400 %, de la largeur (b_{E}) de l'incision (4), qui est présente en dehors de la section d'incision s'étendant de manière ondulée (6) et en dehors de la zone d'incision centrale (6b).

10. Pneumatique de véhicule selon l'une quelconque des revendications 1 à 9, **caractérisé en ce que** la section d'incision s'étendant de manière ondulée (6), vue en coupe transversale, se compose de la zone d'incision radialement extérieure (6a), de la zone d'incision radialement intérieure (6c) et de la zone d'incision centrale (6b) s'étendant en forme d'arc.

11. Pneumatique de véhicule selon l'une quelconque des revendications 1 à 10, **caractérisé en ce que** la zone d'incision radialement extérieure (6a) présente une longueur (cₐ), rapportée à la surface centrale d'incision (M_{F}), déterminée dans la direction radiale, de 5 % à 40 %, notamment de 20 % à 30 %, de la profondeur maximale (t_{E}) de l'incision (4).

12. Pneumatique de véhicule selon l'une quelconque des revendications 1 à 11, **caractérisé en ce que** la zone d'incision centrale (6b) présente une longueur (C_{b}), rapportée à la surface centrale d'incision (M_{F}), déterminée dans la direction radiale, de 10 % à 50 %, notamment de 20 % à 40 %, de la profondeur maximale (t_{E}) de l'incision (4).

13. Pneumatique de véhicule selon l'une quelconque des revendications 1 à 12, **caractérisé en ce que** la zone centrale d'incision (6b) présente un plan de symétrie (E₂) qui s'étend à une profondeur constante (t_{E2}), déterminée dans la direction radiale, notamment de 25 % à 60 %, de préférence jusqu'à 50 %, de la profondeur maximale (t_{E}) de l'incision (4).

14. Pneumatique de véhicule selon l'une quelconque des revendications 1 à 13, **caractérisé en ce qu'**au moins une surélévation de base (13, 14), notamment exactement une, est réalisée dans chaque autre section d'incision (5, 7), chaque autre section d'incision (5, 7) présentant dans la zone de la surélévation de base (13, 14), à son endroit le moins profond dans la direction radiale, une profondeur (t_{E}") de 30 % à 75 % de la profondeur maximale (t_{E}) de l'incision (4), et la surélévation de base (13, 14) étant réalisé de préférence en dehors de la région de la zone d'incision centrale (6b), de telle sorte que la zone d'incision centrale (6b) et la surélévation de base (13, 14) ne se chevauchent pas dans la direction radiale.

15. Pneumatique de véhicule selon l'une quelconque des revendications 1 à 14, **caractérisé en ce que** les incisions (4), en vue de dessus, se composent chacune d'une seule section d'incision s'étendant de manière ondulée (6) et des deux autres sections d'incision (5, 7) et/ou
**en ce que** les incisions (4), en vue de dessus, se composent de deux sections d'incision s'étendant de manière ondulée (6) et de trois autres sections d'incision (5, 7) réalisés en alternance avec celles-ci et/ou
**en ce que** les incisions (4), en vue de dessus sont réalisées respectivement de manière symétrique par rapport à un plan central de section transversale (E₁) orienté en direction radiale, s'étendant en vue de dessus perpendiculairement à la direction d'extension de l'incision (4) ainsi que par rapport à l'extension longitudinale de l'incision (4) à travers le centre de l'incision (4).
